# EUROPEAN PATENT SPECIFICATION

(11) **EP 0 939 090 B1**
(45) Date of publication and mention of the grant of the patent: **18.09.2002**
(21) Application number: 99103532.0
(22) Date of filing: 24.02.1999
(51) Int. Cl.: C08F 290/12, C08F 255/04, C08F 257/02, C08F 8/00, C08F 257/00

(54) **Graft copolymer and process for production thereof**
Pfropfcopolymer und Verfahren zu dessen Herstellung
Copolymer greffé et son procédé de production

(30) Priority: 25.02.1998 JP 4355498
(43) Date of publication of application: 01.09.1999
(73) Proprietor: MITSUBISHI CHEMICAL CORPORATION, Chiyoda-ku, Tokyo 100-0005 (JP)
(72) Inventor: Kitani, Yasuo, Mitsubishi Chemical Corp., Yokkaichi-shi, Mie 510-0848 (JP); Hayama, Kazuhide, Mitsubishi Chemical Corp., Yokkaichi-shi, Mie 510-0848 (JP)
(74) Representative: Werner, Hans-Karsten, Dr.Dipl.-Chem.

(56) References cited:
- EP-A- 0 321 403
- EP-A- 0 479 611
- US-A- 4 257 933
- DATABASE WPI Section Ch, Week 9145 Derwent Publications Ltd., London, GB; Class A21, AN 91-329920 XP002105854 & JP 03 221513 A (MITSUBISHI PETROCHEMICAL CO LTD), 30 September 1991 (1991-09-30)

## Description

### Technical Field

This invention relates to a graft copolymer which, when applied to a surface of a molded product of a thermoplastic resin or the like, can impart coating properties, printing properties and antistatic properties to the molded product while maintaining sufficient adhesion to the molded product, and a process for production thereof.

### Related Art

Methods commonly used to improve the coating properties and printing properties of molded products of various thermoplastic resins, especially, nonpolar olefin resins have been chemical treatment, corona discharge treatment, and plasma treatment of surfaces of the molded products, thereby imparting adherence to paints and printing inks. However, these methods have not necessarily been successful in satisfying demands from the market.

EP-A-0 321 403 discloses a contact lens of a polymer of a derivative of a polyvinyl alcohol containing a cross-linked addition reaction product of units of a special structure.

Publications such as Japanese Unexamined Patent Publication Nos. 147680/88, 221513/91 and 13747/92, on the other hand, propose to apply to a surface of the above-mentioned molded product a graft copolymer obtained by radical copolymerizing a radical polymerizable compound, such as an acrylic alkyl ester, with a radical polymerizable olefin polymer or a radical polymerizable styrene-butadiene block copolymer, the radical polymerizable olefin polymer or the radical polymerizable styrene-butadiene block copolymer being obtained by reacting a radical polymerizable compound with a modified olefin polymer or a modified styrene-butadiene block copolymer, the modified olefin polymer or the modified styrene-butadiene block copolymer having a functional group selected from a hydroxyl group, a carboxyl group, an anhydrous carboxyl group, an epoxy group, and an isocyanate group, and the latter radical polymerizable compound having a functional group reactive with the above-mentioned functional group. The use of such a graft copolymer makes it possible to impart coating properties and printing properties to the molded product with adhesion to the molded product being fully maintained. None of these methods, however, are unable to impart antistatic properties to the molded product. To enhance antistatic properties, a different approach, such as incorporation of an antistatic agent, had to be taken.

The present invention aims to solve these problems with conventional technologies. That is, an object of the invention is to provide a graft copolymer which, when applied to a surface of a molded product of a thermoplastic resin or the like, can impart coating properties, printing properties and antistatic properties to the molded product while maintaining sufficient adhesion to the molded product. Another object of the invention is to provide a process for producing such a graft copolymer, and also provide a film and a sheet comprising the graft copolymer.

### Summary of the Invention

The present invention provides a graft copolymer comprising an olefin polymer or a block copolymer, and an ionic group-containing polymer grafted to the olefin polymer or the block copolymer by a bridging group whose bridging chain has 4 or more atoms. The bridging group of the graft copolymer of the invention has in the bridging chain a group selected from the group consisting of -COO-, -CONH-, -O-, -CONHCOO- and -COOCH₂CH₂NHCOO-, and a group selected from the group consisting of -OCO-, -NHCO-, -OCONHCO-, -OCONHCH₂CH₂OCO- and -O-. The bridging group has a structure of the formula (1)

- A-B-D (1)

where A is -R₁COO-, -R₁CONH-, -R₁O-, -R₁CONHCOO- or -R₁COOCH₂CH₂NHCOO-,
B is -R₂(OR₃)ₙ- or -R₂(OCOR₃)ₙ-,
D is -OCO-, -NHCO-, -OCONHCO-, -OCONHCH₂CH₂OCO- or -O-,
R₁ is a substituted or unsubstituted straight chain or branched alkylene group, or a substituted or unsubstituted cycloalkylene group, R₁ preferably is a straight chain or branched alkylene group, or a cycloalkylene group, each group having 1 to 18 carbon atoms, and one or more hydrogen atoms of the alkylene group or the cycloalkylene group may be substituted by a carboxyl group, an ester group, an acyl group, a hydroxyl group, or an aryl group,
R₂ is a substituted or unsubstituted straight chain or branched alkylene group, R₂ preferably is a straight chain or branched alkylene group having 1 to 18 carbon atoms, and one or more hydrogen atoms of the alkylene group may be substituted by a hydroxyl group,
R₃ is a substituted or unsubstituted straight chain or branched alkylene group, R₃ preferably is a straight chain or branched alkylene group having 1 to 18 carbon atoms, and one or more hydrogen atoms of the alkylene group may be substituted by a carboxyl group, an ester group, an acyl group, a hydroxyl group, or an aryl group, and
n is an integer of 0 to 6.

Preferable graft copolymer of the present invention is a graft copolymer comprising a block copolymer, especially, a block copolymer of a monovinyl aromatic hydrocarbon and a conjugated diene, and an ionic group-containing polymer grafted to the block copolymer by a bridging group whose bridging chain has 4 or more atoms. The ionic group-containing polymer, preferably, either has a structure formed by polymerizing a radical polymerizable unsaturated compound having an ionic group, or has a structure formed by copolymerizing a radical polymerizable unsaturated compound having an ionic group with a radical polymerizable unsaturated compound having no ionic group. The ionic group is a cationic group such as a tertiary amine base or a quaternary ammonium base; an amphoteric group such as a carboxybetaine group, a sulfobetaine group, or an N-oxide group; or an anionic group such as a carboxylate group or a sulfonate group.

The present invention also provides a film or sheet having the above-described graft copolymer laminated on a film or sheet comprising a thermoplastic resin.

The invention further provides a process for producing a graft copolymer, which comprises reacting a radical polymerizable unsaturated compound (b) with a. modified olefin polymer (a1) or a modified block copolymer (a2) to form a radical polymerizable olefin polymer (c1) or a radical polymerizable block copolymer (c2), the modified olefin polymer (a1) or the modified block copolymer (a2) having a functional group selected from the group consisting of a hydroxyl group, a carboxyl group, an anhydrous carboxyl group, an epoxy group, and an isocyanate group, and the radical polymerizable unsaturated compound (b) having a functional group reactive with the above functional group; then radical copolymerizing a radical polymerizable unsaturated compound (d) having an ionic group with the radical polymerizable olefin polymer (c1) or the radical polymerizable block copolymer (c2). A radical polymerizable unsaturated compound (d') having a precursor group for an ionic group may be radical copolymerized with the radical polymerizable olefin polymer (c1) or the radical polymerizable block copolymer (c2), followed by converting the precursor group into an ionic group, whereby a graft copolymer can be produced. In either process for production, a radical polymerizable unsaturated compound having no precursor group for an ionic group can also be copolymerized during radical copolymerization.

### Detailed Description of the Invention

### Preferred embodiments

The graft copolymer of the present invention is characterized in that an ionic group-containing polymer is grafted to an olefin polymer or a block copolymer by a bridging group whose bridging chain has 4 or more atoms.

The bridging group of the graft copolymer of the invention is not restricted in structure, as long as the number of the bridging chain that connects the olefin polymer or the block copolymer and the ionic group-containing polymer is 4 or more. The preferred bridging chain has a group selected from the group consisting of -COO-, -CONH-, -O-, -CONHCOO- and -COOCH₂CH₂NHCOO-, and a group selected from the group consisting of -OCO-, -NHCO-, -OCONHCO-, -OCONHCH₂CH₂OCO- and -O-. A combination of the former group and the latter group is not restricted, and the same group may be selected for the combination. An alkylene group or the like may be present, or may not be present, between the olefin polymer and the former group, between the former group and the latter group, or between the latter group and the ionic group-containing polymer.

A particularly preferred structure of the bridging group is the structure of the formula (1). In the formula (1), the carbon number of the alkylene group that R₁ to R₃ can each assume is preferably 1 to 18, and the alkylene group may be straight chain or branched. In the present specification, "the alkylene group" includes a polymethylene having a free valence at carbon at both ends of a straight chain hydrocarbon, and -CH₂-. The cycloalkylene group that R₁ can be is preferably one in which the number of carbon atoms constituting the ring is 3 to 10. More preferably, this carbon number is 4 to 7. The "cycloalkylene group" in the present specification includes a cycloalkylene group having an alkyl group. For example, methylcyclohexylene or dimethylcyclohexylene can also be taken as R₁.

One or more hydrogen atoms constituting the alkylene group or cycloalkylene group that R₁ to R₃ can become may be substituted by a carboxyl group, an ester group, an acyl group; a hydroxyl group, or an aryl group. The type of the ester group, acyl group or aryl group is not restricted, but is selected in a range in which the intended effect of the graft copolymer of the present invention is not excessively inhibited. Examples of the ester group are an alkyl ester such as methyl ester, ethyl ester or propyl ester; a cycloalkyl ester such as cyclopentyl ester, cyclohexyl ester, or methylcyclohexyl ester; and an aryl ester such as phenyl ester, tolyl ester, or naphthyl ester. Examples of the acyl group are acetyl, propionyl, butyryl, valeryl, benzoyl, toluoyl, and salicyloyl. Examples of the aryl group are phenyl, tolyl, xylyl, biphenylyl, naphthyl, and anthryl.

Details of the olefin polymer, the block copolymer and the ionic group-containing polymer that constitute the graft copolymer of the present invention will become clear from the following description of the process for production:

The process for producing the graft copolymer of the present invention is not restricted. As the preferred process for production, however, the process for production according to the invention can be exemplified which comprises reacting a radical polymerizable unsaturated compound (b) with a modified olefin polymer (a1) or a modified block copolymer (a2) to form a radical polymerizable olefin polymer (c1) or a radical polymerizable block copolymer (c2), and then radical copolymerizing a radical polymerizable unsaturated compound (d) having an ionic group with the radical polymerizable olefin polymer (c1) or the radical polymerizable block copolymer (c2).

The modified olefin polymer (a1) used in the process for production of the invention has a functional group which is a hydroxyl group, a carboxyl group, an anhydrous carboxyl group, an epoxy group, or an isocyanate group. Such modified olefin polymer (a1) is obtained, usually, by modifying an olefin polymer with an unsaturated compound having any of the functional groups by the customary method, or by copolymerizing an α-olefin with an ethylenic unsaturated compound having any of the functional groups by the customary method.

Examples of the olefin polymer used in modification are homopolymers of α-olefins having about 2 to 8 carbon atoms, such as ethylene, propylene, butene-1, pentene-1, hexene-1, and octene-1; and copolymers of these α-olefins with other α-olefins having about 2 to 20 carbon atoms, such as ethylene, propylene, butene-1, 3-methylbutene-1, pentene-1, 4-methylpentene-1, hexene-1, octene-1, and decene-1, or vinyl compounds such as vinyl acetate, vinyl chloride, acrylic acid, methacrylic acid, acrylic ester, methacrylic ester, and styrene. Specific examples of the olefin polymer are olefin resins, e.g., ethylene resins such as ethylene homopolymer (e.g., straight chain or branched low, medium or high density polyethylene), ethylene-propylene copolymer, ethylene-butene-1 copolymer, ethylene-3-methylbutene-1 copolymer, ethylene-4-methylpentene-1 copolymer, ethylene-hexene-1 copolymer, ethylene-octene-1 copolymer, ethylene vinyl acetate copolymer, ethylene-acrylic acid copolymer, ethylene-methacrylic acid copolymer, and ethylene-ethyl acrylate copolymer, propylene resins such as propylene homopolymer, propylene-ethylene copolymer, and propylene-ethylene-butene-1 copolymer, and butene-1 resins such as butene-1 homopolymer, butene-1-ethylene copolymer, and butene-1-propylene copolymer; chlorinated olefin resins or elastomers formed by adding 10 to 40% by weight of chlorine to these olefin resins; and olefin elastomers such as ethylene-propylene copolymer, ethylene-butene-1 copolymer, ethylene-propylene-unconjugated diene copolymer, and ethylene-butene-1-unconjugated diene copolymer. Of these, an olefin elastomer such as ethylene-propylene copolymer is preferred in the present invention.

As an α-olefin to be used in copolymerization with the ethylenic unsaturated compound, the aforementioned α-olefin having about 2 to 8 carbon atoms can be exemplified.

As the modified block copolymer (a2) used in the process for production of the invention, a modified monovinyl-substituted aromatic hydrocarbon-conjugated diene block copolymer having a functional group, which is a hydroxyl group, a carboxyl group, an anhydrous carboxyl group, an epoxy group, or an isocyanate group, can be used preferably. This type of block copolymer is usually obtained by modifying a monovinyl-substituted aromatic hydrocarbon-conjugated diene block copolymer, or a hydrogenation product thereof, with an unsaturated compound having any of the functional groups by the customary method.

The monovinyl-substituted aromatic hydrocarbon-conjugated diene block copolymer refers herein to a block copolymer comprising a polymer block of a monovinyl-substituted aromatic hydrocarbon, such as styrene, α-methylstyrene, p-methylstyrene, dimethylstyrene, or vinylnaphthalene, and a polymer block of a conjugated diene such as butadiene or isoprene, or a hydrogenation product thereof. Various types of the copolymer are known, such as linear, radially branched, and ramified, tapered ones. In the present invention, it is preferred to use a linear type or a radially branched type.

The linear block copolymer is expressed by the general formula (X-Y)ₙ, X-(Y-X)ₙ, or Y-(X-Y)ₙ where X is a polymer block of a monovinyl-substituted aromatic hydrocarbon, Y is a polymer block of a conjugated diene, and n is an integer of 1 or more, generally 1 to 5. The radially branched block copolymer is expressed by the general formula (X-Y)ₙ-Z, Xₙ-(Y-X)ₘ-Z, or Yₙ-(X-Y)ₘ-Z where X and Y are as defined above, Z is a residue of a polyfunctional coupling agent used for the formation of a radially branched block, and n and m are each an integer of 1 or more, generally 1 to 5.

Preferred among them for the present invention is. an elastomer such as styrene-butadiene block copolymer, styrene-butadiene-styrene block copolymer, styreneisoprene block copolymer or styrene-isoprene-styrene block copolymer, or a hydrogenation product thereof.

To convert the aforementioned olefin polymer or the block copolymer into the modified olefin polymer (a1) or (a2), an unsaturated compound having a hydroxyl group, a carboxyl group, an anhydrous carboxyl group, an epoxy group, or an isocyanate group as a functional group is used in the invention.

Exemplified as the unsaturated compound having a hydroxyl group is a hydroxyalkyl (meth)acrylate such as 2-hydroxyethyl (meth)acrylate, 2-hydroxypropyl (meth)acrylate, or 2-hydroxybutyl (meth)acrylate, an alkenylalcohol such as N-methylol(meth)acrylamide or 2-propen-1-ol, an alkinylalcohol such as 2-propin-1-ol, hydroxyethyl vinyl ether, or 2-hydroxyethyl (meth)acrylate-6-hexanolide addition polymer. In the present specification, "meth(acryl)" refers to acryl or methacryl.

The unsaturated compound having a carboxyl group is, for example, an unsaturated acid such as (meth) acrylic acid, crotonic acid, sorbic acid, fumaric acid, maleic acid, itaconic acid, or citraconic acid, or a carboxyalkyl vinyl ether such as carboxyethyl vinyl ether, or carboxypropyl vinyl ether.

The unsaturated compound having an anhydrous carboxyl group is, for example, maleic anhydride, itaconic anhydride, citraconic anhydride, tetrahydrophthalic anhydride, or methyltetrahydrophthalic anhydride.

The unsaturated compound having an epoxy group is, for example, an unsaturated carboxylic acid glycidyl ester such as glycidyl (meth)acrylate, maleic acid methylglycidyl ester, maleic acid ethylglycidyl ester, maleic acid propylglycidyl ester, or maleic acid diglycidyl ester, glycidyl ester of p-styrenecarboxylic acid, a glycidyl ether such as vinylglycidyl ether, allylglycidyl ether, 2-methylallylglycidyl ether, or styrene-p-glycidyl ether, an epoxystyrene such as p-glycidylstyrene, or an epoxyolefin such as 3,4-epoxy-butene-1, or 3,4-epoxy-3-methyl-butene-1.

The unsaturated compound having an isocyanate group is, for example, 2-isocyanatoethyl (meth)acrylate, (meth)acryloyl isocyanate, vinyl isocyanate, or isopropenyl isocyanate.

The molecular weight of the modified olefin polymer (a1) or the modified block copolymer (a2) is preferably a number average molecular weight of about 1, 000 to 1,000,000, especially about 5,000 to 300,000. The content of the aforesaid unsaturated compound unit in the modified olefin polymer (a1) or the copolymer (a2) is preferably about 0.01 to 30% by weight, especially about 0.05 to 20% weight.

According to the process for production of the present invention, the modified olefin polymer (a1) or the modified block copolymer (a2) is reacted with the radical polymerizable unsaturated compound (b) having a functional group reactive with the functional group of that polymer or copolymer to form the radical polymerizable olefin polymer (c1) or the radical polymerizable block copolymer (c2).

When reacted with the modified polymer (a1) or (a2) having a hydroxyl group, the radical polymerizable unsaturated compound (b) may be, for example, an unsaturated compound having a carboxyl group, an epoxy group, or an isocyanate group. When reacted with the modified polymer (a1) or (a2) having a carboxyl group or an anhydrous carboxyl group, the radical polymerizable unsaturated compound (b) may be, for example, an unsaturated compound having a hydroxyl group, an epoxy group, or an isocyanate group. when reacted with the modified polymer (a1) or (a2) having an epoxy group, the radical polymerizable unsaturated compound (b) may be, for example, an unsaturated compound having a hydroxyl group or a carboxyl group. When reacted with the modified polymer (a1) or (a2) having an isocyanate group, the radical polymerizable unsaturated compound (b) may be, for example, an unsaturated compound having a hydroxyl group or a carboxyl group. Concretely, the same unsaturated compound as enumerated for modification for preparation of the modified polymer (a1) or (a2) can be exemplified.

The reaction between the modified polymer (a1) or (a2) and the radical polymerizable unsaturated compound (b) can be performed by a publicly known method, e.g., the method described in the aforementioned Japanese Unexamined Patent Publication No. 13747/92. The content of the radical polymerizable unsaturated compound (b) in the resulting radical polymerizable olefin polymer (c1) or the radical polymerizable block copolymer (c2) is preferably about 0.01 to 10% by weight.

Then, the resulting radical polymerizable olefin polymer (c1) or the radical polymerizable block copolymer (c2) is subjected either to radical copolymerization with the radical polymerizable unsaturated compound (d) having an ionic group, or to radical copolymerization with the radical polymerizable unsaturated compound (d') having a precursor group for an ionic group, followed by modifying the precursor group into an ionic group, to produce the graft copolymer of the present invention. As the ionic group, a cationic group, an amphoteric group or an anionic group can be used.

Examples of the radical.polymerizable unsaturated compound (d) having a cationic group as the ionic group are tertiary amine base-containing unsaturated compounds including tertiary amino group-containing (meth)acrylates such as N,N-dimethylaminoethyl (meth)acrylate, N, N-diethylaminoethyl (meth)acrylate, N, N-dimethylaminopropyl (meth)acrylate, and N,N-diethylaminopropyl (meth)acrylate, tertiary amino group-containing (meth)acrylamides such as N,N-dimethylaminoethyl(meth)acrylamide, N,N-diethylaminoethyl(meth)acrylamide, N, N-dimethylaminopropyl(meth)acrylamide, and N,N-diethylaminopropyl(meth)acrylamide, tertiary amino group-containing aromatic vinyl compounds such as p-dimethylaminomethylstyrene, p-dimethylaminoethylstyrene, p-diethylaminomethylstyrene, and p-diethylaminoethylstyrene, tertiary amino group-containing unsaturated heterocyclic compounds such as vinylimidazole (e.g., 1-vinylimidazole, 2-methyl-1-vinylimidazole, 4-methyl-1-vinylimidazole, 5-methyl-1-vinylimidazole, 2-lauryl-1-vinylimidazole, or 4-t-butyl-1-vinylimidazole), vinylpyridine (e.g., 2-vinylpyridine, 3-vinylpyridine, 4-vinylpyridine, 2-methyl-5-vinylpyridine, 3-methyl-5-vinylpyridine, 4-methyl-5-vinylpyridine, 6-methyl-5-vinylpyridine, 2-methyl-4-vinylpyridine, 3-methyl-4-vinylpyridine, 2-lauryl-4-vinylpyridine, 2-lauryl-5-vinylpyridine, 2-t-butyl-4-vinylpyridine, or 2-t-butyl-5-vinylpyridine), vinylpiperidine (e.g., 1-vinylpiperidine, or 4-methyl-4-vinylpiperidine), vinylpiperazine (e.g., 2-lauryl-1-vinylpiperazine, or 4-methylpiperazinoethyl (meth)acrylate), and vinylmorpholine (e.g., 4-vinylmorpholine, 2-methyl-4-vinylmorpholine, or 4-allylmorpholine), and tertiary amino group-containing unsaturated imide compounds which are the reaction products between unsaturated carboxylic anhydrides, such as maleic anhydride or itaconic anhydride, and N,N-dimethyl-1,3-propanediamine; and quaternary ammonium base-containing unsaturated compounds converted from these tertiary amine base-containing unsaturated compounds (including the. tertiary amino group-containing (meth)acrylates, tertiary amino group-containing (meth)acrylamides, tertiary amino group-containing aromatic vinyl compounds, tertiary amino group-containing unsaturated heterocyclic compounds, and tertiary amino group-containing unsaturated imide compounds) by the use of cation-imparting agents.

Examples of the cation-imparting agents are halogenated alkyl derivatives such as methyl chloride, ethyl chloride, butyl chloride, octyl chloride, lauryl chloride, stearyl chloride, cyclohexyl chloride, benzyl chloride, phenethyl chloride, allyl chloride, methyl bromide, ethyl bromide, butyl bromide, octyl bromide, lauryl bromide, stearyl bromide, benzyl bromide, allyl bromide, methyl iodide, ethyl iodide, butyl iodide, octyl iodide, lauryl iodide, stearyl iodide, and benzyl iodide; alkyl haloacetates such as methyl monochloroacetate, ethyl monochloroacetate, and ethyl bromoacetate; dialkyl sulfuric acids such as dimethyl sulfuric acid, and diethyl sulfuric acid; inorganic acids such as hydrochloric acid, hydrobromic acid, sulfuric acid, and phosphoric acid; organic acids such as formic acid, acetic acid, and propionic acid; and tertiary amine mineral acid salt epihalohydrin adducts such as N-(3-chloro-2-hydroxypropyl)-N,N,N-trimethylammonium chloride.

Further examples of the radical polymerizable unsaturated compound (d) having a cationic group as the ionic group are the reaction products between isocyanate group-containing unsaturated compounds, such as 2-isocyanatoethyl (meth)acrylate, and quaternary ammonium base-containing compounds having a group reactive with an isocyanate group, such as hydroxyethyl-N,N,N-trimethylammonium chloride; the reaction products between epoxy group-containing unsaturated compounds, such as glycidyl (meth)acrylate or vinyl glycidyl ether, and trimethylaminohydrochloric acid salts; phosphonium base-containing unsaturated compounds formed by introducing a cation into epoxy group-containing unsaturated compounds by the use of tertiary phosphorus compounds in the presence of acids; and sulfonium base-containing unsaturated compounds formed by introducing a cation into epoxy group-containing unsaturated compounds by the use of sulfide compounds in the presence of acids.

Examples of the radical polymerizable unsaturated compound (d) having an amphoteric group as the ionic group are carboxybetaine group-containing unsaturated compounds or sulfobetaine group-containing unsaturated compounds formed by making the aforementioned tertiary amine base-containing unsaturated compounds (including the tertiary amino group-containing (meth)acrylates, tertiary amino group-containing (meth)acrylamides, tertiary amino group-containing aromatic vinyl compounds, tertiary amino group-containing unsaturated heterocyclic compounds, and tertiary amino group-containing unsaturated imide compounds) amphoteric by use of various betaine-incorporating agents, such as sodium monochloroacetate, potassium monochloroacetate, sodium monobromoacetate, potassium monobromoacetate, β-propiolactone, and propanesultone; and N-oxide group-containing unsaturated compounds formed by making the aforementioned tertiary amine base-containing unsaturated compounds amphoteric by use of various N-oxide-incorporating agents such as hydrogen peroxide, peracetic acid, perbenzoic acid, and ozone.

Examples of the radical polymerizable unsaturated compound (d) having an anionic group as the ionic group are carboxylate group-containing unsaturated compounds and sulfonate group-containing unsaturated compounds formed by neutralizing unsaturated carboxylic acids (e.g., (meth)acrylic acid, crotonic acid, sorbic acid, fumaric acid, maleic acid, itaconic acid, monoethyl maleate, monobutyl maleate, mono-2-ethylhexyl maleate, and monolauryl maleate), or unsaturated sulfonic acids (e.g., (meth)acryloyloxyethylsulfonic acid, allylsulfonic acid, and styrenesulfonic acid) with an alkali metal such as sodium, potassium, or lithium; an alkaline earth metal such as calcium or magnesium; a primary amine such as ammonia, methylamine, ethylamine, butylamine, laurylamine, cyclohexylamine, benzylamine, or ethanolamine; a secondary amine such as diethylamine, dibutylamine, dicyclohexylamine, or diethanolamine; a tertiary amine such as trimethylamine, triethylamine, tributylamine, dimethyllaurylamine, dimethylstearylamine, methyldistearylamine, benzyldimethylamine, triethanolamine, or triisopropanolamine; an alkanolamine such as 2-amino-2-methyl-1-propanol, 2-amino-2-methyl-1,3-propanediol, or aminomercaptopropanediol; or a basic amino acid compound such as lysine, arginine, or histidine.

When the radical polymerizable unsaturated compound (d') having a precursor group for an ionic group is used, any of the following methods can be adopted:

The aforementioned tertiary amine base-containing unsaturated compound (e.g., the tertiary amino group-containing (meth)acrylate, tertiary amino group-containing (meth)acrylamide, tertiary amino group-containing aromatic vinyl compound, tertiary amino group-containing unsaturated heterocyclic compound, or tertiary amino group-containing unsaturated imide compound) is used as the radical polymerizable unsaturated compound (d'), and it is radical copolymerized with the radical polymerizable olefin polymer (c1) or the radical polymerizable block copolymer (c2), whereafter the precursor group is modified into a quaternary ammonium base by use of the aforementioned cation-imparting agent;

The epoxy group-containing unsaturated compound is used as the radical polymerizable unsaturated compound (d'), and it is radical copolymerized with the polymer (c1) or (c2), whereafter the precursor group is modified into a phosphonium base or a sulfonium base by use of the aforementioned cation-imparting agent;

The tertiary amine base-containing unsaturated compound is used as the radical polymerizable unsaturated compound (d'), and it is radical copolymerized with the polymer (c1) or (c2), whereafter the precursor group is modified into a carboxybetaine group, a sulfobetaine group, or an N-oxide group by use of the aforementioned amphoterism-imparting agent; and

The unsaturated carboxylic acid or unsaturated sulfonic acid is used as the radical polymerizable unsaturated compound (d'), and it is radical copolymerized with the polymer (c1) or (c2), whereafter the precursor group is modified into a carboxylate group or a sulfonate group by use of the aforementioned neutralizing agent.

Of the above-mentioned ionic groups, the tertiary amine base and quaternary ammonium base as the cationic groups, the carboxybetaine group, sulfobetaine group and N-oxide group as the amphoteric groups, and the carboxylate group and sulfonate group as the anionic groups are named as the preferred ionic groups in the present invention.

In radical copolymerizing the radical polymerizable unsaturated compound (d) or the radical polymerizable unsaturated compound (d') with the radical polymerizable olefin polymer (c1) or the radical polymerizable block copolymer (c2) in the invention, the total amount of the unsaturated compound (d) or (d') relative to the total amount of the polymer (c1) or (c2) is set at, preferably, 0.1 to 99.9% by weight, more preferably, 2 to 98% by weight. Usually used as the solvent for the reaction is an aromatic compound such as toluene or xylene, a ketone such as methyl ethyl ketone or methyl isobutyl ketone, an ester such as ethyl acetate or butyl acetate, an ether such as 1,2-dimethoxyethane, diethylene glycol dimethyl ether, or diisopropyl ether, an alcohol such as ethanol, isopropanol, or butanol, each of these solvents being used alone or as a mixture. The reaction is performed for 0.1 to 40 hours at a temperature of about 20 to 140°C in the presence of about 0.01 to 5% by weight of one or more of azo compounds such as 2,2'-azobisisobutyronitrile, 2,2'-azobis(2-methylbutyronitrile), 2,2'-azobis(2,4-dimethylvaleronitrile), 2,2'-azobis(4-methoxy-2,4-dimethylvaleronitrile), dimethyl 2,2'-azobisisobutyrate, and 1,1'-azobis(1-cyclohexanecarbonitrile), and organic peroxides such as benzoyl peroxide, dicumyl peroxide, di-t-butyl peroxide, and lauroyl peroxide.

During this radical copolymerization, other radical polymerizable unsaturated compound may be coexistent in an amount of 98% by weight or less based on the total amount of the unsaturated compound (d) or (d'), and may be copolymerized together with (d) or (d').

Examples of such other radical polymerizable unsaturated compound are alkyl (meth)acrylates such as (meth)acrylic acid, methyl (meth)acrylate, ethyl (meth)acrylate, butyl (meth)acrylate, 2-ethylhexyl (meth)acrylate, lauryl (meth)acrylate, and stearyl (meth)acrylate, (meth)acrylamides such as (meth)acrylamide, N-alkyl(meth)acrylamides, and N,N-dialkyl(meth)acrylamides, hydroxyalkyl (meth)acrylates such as 2-hydroxyethyl (meth)acrylate, 2-hydroxypropyl (meth)acrylate, and 2-hydroxybutyl (meth)acrylate, dialkylaminoalkyl (meth)acrylates such as diethylaminomethyl (meth)acrylate, and diethylaminoethyl (meth)acrylate, vinyl ethers such as glycidyl (meth)acrylate, (meth)acrylonitrile, vinyl acetate, vinyl chloride, ethyl vinyl ether, butyl vinyl ether, and hexyl vinyl ether, aromatic vinyls such as vinyltoluene, styrene, and α-methylstyrene, and α-olefins such as ethylene, propylene, and butene-1.

Modification of the precursor group into an ionic group after radical copolymerization of the radical polymerizable unsaturated compound (d') is performed using an ionic group-imparting agent in an amount of 0.1 to 10 mols per mol of the precursor group of the unsaturated compound (d'). The reaction is carried out for about 0.1 to about 40 hours at a temperature of about 0 to 150°C in a polar solvent such as the aforementioned ether, alcohol or water.

The graft copolymer of the present invention produced by the process for production of the present invention can be applied, mainly, as a coating or the like on a surface of a molded product of thermoplastic resin such as olefin (e.g., ethylene or propylene) resin or styrene resin. Adhesion between the applied graft copolymer and the molded product is extremely satisfactory. By so applying the graft copolymer of the present invention, coating properties, printing properties, and antistatic properties can be imparted favorably to the molded product.

To form a layer of the graft copolymer by coating, a reaction solution of the graft copolymer obtained upon completion of the aforementioned reaction is used unchanged as a coating solution, or diluted with the above-mentioned solvent to form a coating solution. Alternatively, the graft copolymer of the present invention is isolated, as necessary, by a publicly known method, such as reprecipitation or distilling off of the solvent, and then dissolved or dispersed again in a different solvent to make a coating solution. Alternatively, the isolated graft copolymer is dispersed in water to form a coating solution. The solids concentration at this time is preferably adjusted to about 0.01 to 50% by weight.

In the so formed solution or dispersion, there can be incorporated, as necessary, other resin such as acrylic resin, fluorocarbon resin, or styrene resin, a thickening agent, a thixotropic agent, a viscosity modifier, a leveling agent, an antioxidant, an ultraviolet absorber, a light stabilizer, a plasticizer, a lubricant, a tackifier, a flame retardant, a crosslinking agent, a pigment, a dye, a pigment/dye dispersant, and a filler. The solution or dispersion which may contain these additives is coated onto a surface of a resin molded product by a publicly known coating method, such as roll coating, air blade coating, bar coating, knife coating or dip coating, and is then dried to form a layer on the surface of the molded product. Its amount coated on this occasion is preferably about 0.01 to 500 g/cm² on a dry weight basis.

In addition to the above-described coating method, a method for forming the layer on a surface of a molded product of thermoplastic resin or the like may be one comprising forming the graft copolymer of the present invention, alone or as a mixture with other resin, etc., into a film or sheet by ordinary melt forming, and then laminating it to the surface of the resin molded product by use of an adhesive or the like; or extruding a melt of the material onto the surface of the resin molded product in the customary manner to laminate its layer thereto.

### Examples

The present invention will be described in greater detail by way of the following Examples and Comparative Examples. The materials, periods of time, proportions, and procedures shown therein may be modified and changed, where necessary, unless such modifications and changes deviate from the spirit of the present invention. Hence, the scope of the invention is in no way limited to the following working examples.

### [Example 1]

A glass flask equipped with a stirrer, a reflux condensing tube, a dropping funnel, and a thermometer was charged with 100 g of a hydrogenation product of styrene-butadiene-styrene block copolymer (Clayton G-1652, Shell Chemical), and 1,000 g of xylene. These materials were heated to 125°C in a stream of nitrogen until they were dissolved. Then, a solution of 4 g of maleic anhydride and 0.6 g of dicumyl peroxide in 80 g of xylene was added dropwise over 6 hours, whereby the reaction was performed. Upon completion of the reaction, the reaction solution cooled to a temperature close to room temperature was added into acetone to. precipitate the polymer again. The reprecipitated polymer was collected by filtration, and dried to obtain maleic anhydride modified styrene-butadiene-styrene block copolymer. The content of the maleic anhydride unit in this modified block copolymer was 1.2% by weight.

Then, the same glass flask as above was charged with 30 g of the resulting maleic anhydride modified block copolymer, 150 g of toluene, and 0.06 g of hydroquinone monomethyl ether. These materials were heated to 100°C in an air stream until they were dissolved. Then, 0.4 g of 2-hydroxyethyl methacrylate and 1 g of dimethylbenzylamine were added, and the mixture was reacted for 5 hours at the same temperature to obtain a radical polymerizable block copolymer. This radical polymerizable block copolymer had 0.6% by weight of 2-hydroxyethyl methacrylate added thereto.

Then, the same glass flask as above was charged with 90 g of a 17% by weight toluene solution of the resulting radical polymerizable block copolymer, 50 g of butyl methacrylate, 30 g of methyl methacrylate, 20 g of N,N-dimethylaminoethyl methacrylate (referred to simply as "DMMA"), 1 g of azobisisobutyronitrile (referred to simply as "AIBN") as a radical polymerization initiator, 100 g of toluene, and 10 g of methyl ethyl ketone. These materials were heated to 80°C over about 1 hour in a stream of nitrogen, and reacted for 2 hours at the same temperature. Further, 0.3 g of AIBN was added, and the mixture was reacted for 2 hours. Still further, 0.3 g of AIBN was added, and the mixture was reacted for 4 hours.

Then, the reaction mixture was diluted with 20 g of methyl ethyl ketone, whereafter 16 g of benzyl chloride as a cation-imparting agent was added dropwise over about 10 minutes. The mixture was reacted for 9 hours to obtain a quaternary ammonium base-containing graft copolymer.

A 5 wt.% methyl ethyl ketone solution of the resulting graft copolymer was coated onto a surface of a A5-size propylene resin synthetic paper (a product of Oji Yuka Synthetic Paper Co., Ltd.) by means of a bar coater, followed by drying, to form a layer with a thickness of 0.7 g/cm².

On this layer, an ultraviolet curing ink ("Bestcure UV161 Black", T&K TOKA) was spread to a size of 44 mm x 180 mm by means of a four-divided roll in an ink spread tester (RI-Tester, Akira Seisakusho). The specimen was immediately passed 20 cm below a 120 W/cm high pressure mercury lamp 5 times at a rate of 30 m/min for ultraviolet irradiation, whereby the ink was cured. After irradiation, the specimen was allowed to stand for one day at 23°C and relative humidity of 60%. Then, the printing properties, ink adhesion, and antistatic properties of the specimen were evaluated by the following methods. The results are shown in Table 1.

### Printing properties

The state of ink deposition was visually inspected, and evaluated by the following criteria:
- ○:: The amount of ink transfer is sufficient, giving a clear print.
- Δ:: The amount of ink transfer is somewhat insufficient, causing a slightly unclear print.
- ×:: The amount of ink transfer is insufficient, causing a friar.

### Ink adhesion

An adhesive cellophane tape was applied onto the ink layer in a direction of the 44 mm width, and peeled at a stroke. The percentage of the ink peeled off was evaluated by the following criteria:
- ○:: <5%
- Δ:: 5 to 30%
- ×:: >30%

### Antistatic properties

The surface resistivity at 23°C and relative humidity of 60% was measured, and evaluated by the following criteria:
- ○:: <10¹² Ω/□
- Δ:: 10¹² to 10¹⁵ Ω/□
- ×:: >10¹⁵ Ω/□

### [Example 2]

The same procedure as in Example 1 was performed, except that the hydrogenation product of styrene-butadiene-styrene block copolymer was replaced by a hydrogenation product of styrene-isoprene-styrene block copolymer ("Septone 2002", KURARAY CO., LTD.), and 4 g of maleic anhydride was replaced by 20 g of acrylic acid, in the production of the modified block copolymer in Example 1. As a result, a modified block copolymer with an acrylic acid unit content of 1.7% by weight was obtained.

Then, the same glass flask as in Example 1 was charged with 30 g of the resulting acrylic acid modified block copolymer, 150 g of toluene, and 0.06 g of hydroquinone monomethyl ether. These materials were heated to 110°C in an air stream until they were dissolved. Then, 0.4 g of glycidyl methacrylate and 0.2 g of benzyltrimethylammonium chloride were added, and the mixture was reacted for 5 hours at the same temperature to obtain a radical polymerizable , block copolymer. This radical polymerizable block copolymer had 0.3% by weight of glycidyl methacrylate added thereto.

Then, the same glass flask as in Example 1 was charged with 300 g of a 17% by weight toluene solution of the resulting radical polymerizable block copolymer, 80 g of ethyl methacrylate, 10 g of stearyl methacrylate, 10 g of DMMA, and 1 g of AIBN as a radical polymerization initiator. These materials were heated to 80°C over about 1 hour in a stream of nitrogen, and reacted for 2 hours at the same temperature. Further, 0.3 g of AIBN was added, and the mixture was reacted for 2 hours. Still further, 0.3 g of AIBN was added, and the mixture was reacted for 4 hours.

Then, the reaction mixture was diluted with 150 g of methyl isobutyl ketone and 50 g of ethyl alcohol, whereafter the dilution was transferred into an autoclave. The inside of the system was purged with methyl chloride as a cation-imparting agent. Methyl chloride was supplied so as to maintain the pressure of 1 kg/cm² at 50°C, whereby a cation-imparting reaction was performed for 5 hours. As a result, a quaternary ammonium base-containing graft copolymer was obtained.

A synthetic paper was coated in the same manner as in Example 1 using the resulting graft copolymer. Ink was spread on the coating, and the printing properties, ink adhesion, and antistatic properties of the specimen were evaluated. The results are shown in Table 1.

### [Example 3]

The same procedure as in Example 1 was performed, except that the same glass flask as in Example 1 was charged with 100 g of ethylene-propylene copolymer elastomer ("EP11", Japan Synthetic Rubber Co., Ltd.) and 1,000 g of chlorobenzene; these materials were heated to 130°C in a stream of nitrogen until they were dissolved; and then, a solution of 50 g of glycidyl methacrylate and 5 g of dicumyl peroxide in 200 g of chlorobenzene was added dropwise over 5 hours. As a result, a modified ethylene-propylene copolymer with a glycidyl methacrylate unit content of 0.7% by weight was obtained.

Then, the same glass flask as in Example 1 was charged with 30 g of the resulting glycidyl methacrylate modified ethylene-propylene copolymer, 220 g of toluene, and 0.06 g of hydroquinone monomethyl ether. These materials were heated to 110°C in an air stream until they were dissolved. Then, 0.3 g of acrylic acid and 0.3 g of tributylamine were added, and the mixture was reacted for 8 hours at the same temperature to obtain a radical polymerizable ethylene-propylene copolymer. This radical polymerizable ethylene-propylene copolymer had 0.3% by weight of acrylic acid added thereto.

Then, the same glass flask as in Example 1 was charged with 120 g of a 17% by weight toluene solution of the resulting radical polymerizable ethylene-propylene copolymer, 55 g of methyl methacrylate, 30 g of t-butyl methacrylate, 15 g of methacrylic acid, 1 g of AIBN as a radical polymerization initiator, and 80 g of toluene. These materials were heated to 80°C over about 1 hour in a stream of nitrogen, and reacted for 2 hours at the same temperature. Further, 0.3 g of AIBN was added, and the mixture was reacted for 2 hours. Still further, 0.3 g of AIBN was added, and the mixture was reacted for 4 hours.

Then, the reaction mixture was cooled to 40°C, and then diluted with 140 g of methyl ethyl ketone and 40 g of ethyl alcohol. Thereafter, a 5 wt.% ethanol solution of potassium hydroxide as an anion-imparting agent was added dropwise over about 30 minutes. The mixture was reacted for 1 hour to obtain a carboxylate group-containing graft copolymer.

A synthetic paper was coated in the same manner as in Example 1 using the resulting graft copolymer. Ink was spread on the coating, and the printing properties, ink adhesion, and antistatic properties of the specimen were evaluated. The results are shown in Table 1.

### [Example 4]

The same glass flask as in Example 1 was charged with 180 g of a 17% by weight toluene solution of the radical polymerizable block copolymer obtained in Example 1, 55 g of ethyl methacrylate, 30 g of methyl methacrylate, 15 g of DMMA, 1 g of AIBN as a radical polymerization initiator, and 50 g of toluene. These materials were heated to 80°C over about 1 hour in a stream of nitrogen, and reacted for 2 hours at the same temperature. Further, 0.3 g of AIBN was added, and the mixture was reacted for 2 hours. Still further, 0.3 g of AIBN was added, and the mixture was reacted for 4 hours.

Then, the reaction mixture was diluted with 100 g of methyl ethyl ketone and 50 g of ethyl alcohol, whereafter the temperature was adjusted to 75°C, and 9 g of a 35 wt.% aqueous solution of hydrogen peroxide as an amphoterism-imparting agent was added dropwise over about 1 hour. The mixture was reacted for 9 hours at 75°C to obtain an N-oxide group-containing graft copolymer.

A synthetic paper was coated in the same manner as in Example 1 using the resulting graft copolymer. Ink was spread on the coating, and the printing properties, ink adhesion, and antistatic properties of the specimen were evaluated. The results are shown in Table 1.

### [Comparative Example 1)

A synthetic paper was coated in the same manner as in Example 1 using the radical polymerizable block copolymer of Example 1 which had 2-hydroxyethyl methacrylate added to maleic anhydride modified styrene-butadiene-styrene block copolymer. Ink was spread on the coating, and the printing properties, ink adhesion, and antistatic properties of the specimen were evaluated. The results are shown in Table 1.

### [Comparative Example 2]

A synthetic paper was coated in the same manner as in Example 1 using the graft copolymer before treatment with the cation-imparting agent in Example 1. Ink was spread on the coating, and the printing properties, ink adhesion, and antistatic properties of the specimen were evaluated. The results are shown in Table 1.

### [Comparative Example 3]

The same glass flask as in Example 1 was charged with 50 g of butyl methacrylate, 30 g of methyl methacrylate, 20 g of DMMA, 1 g of AIBN as a radical polymerization initiator, 100 g of toluene, and 50 g of methyl ethyl ketone. These materials were heated to 80°C over about 1 hour in a stream of nitrogen, and reacted for 2 hours at the same temperature. Further, 0.3 g of AIBN was added, and the mixture was reacted for 2 hours. Still further, 0.3 g of AIBN was added, and the mixture was reacted for 4 hours.

Then, the reaction mixture was diluted with 50 g of ethyl alcohol, and 16 g of benzyl chloride as a cation-imparting agent was added dropwise over about 10 minutes. The mixture was reacted for 9 hours to obtain a quaternary ammonium base-containing acrylic copolymer.

A synthetic paper was coated in the same manner as in Example 1 using the resulting acrylic copolymer. Ink was spread on the coating, and the printing properties, ink adhesion, and antistatic properties of the specimen were evaluated. The results are shown in Table 1.

**Table 1**

| | Printing properties | Ink adhesion | Antistatic properties |
|---|---|---|---|
| Ex. 1 | ○ | Δ | ○ |
| Ex. 1-a (*1) | ○ | ○ | ○ |
| Ex. 1-b (*2) | ○ | ○ | ○ |
| Ex. 2 | ○ | ○ | ○ |
| Ex. 3 | ○ | ○ | ○ |
| Ex. 4 | ○ | ○ | ○ |
| comp. Ex. 1 | × | × | × |
| Comp. Ex. 2 | ○ | ○ | × |
| Comp. Ex. 3 | ○ | × | ○ |

| | | | |
|---|---|---|---|
| (*1) : 3 Parts by weight of polyisocyanate ("Colonate HL", Nippon Polyurethane Industry Co., Ltd.) and epoxy resin ("Epicoat 191P", Yuka Shell Epoxy Co., Ltd.) were incorporated based on 100 parts by weight of the graft copolymer. | | | |
| (*2): 5 Parts by weight of polyethyleneimine (a 10 wt.% solution prepared by drying "Epomine P-1000", NIPPON SHOKUBAI CO., LTD., under reduced pressure, and then redissolving the residue in ethanol) and 1 part by weight of talc were incorporated based on 100 parts by weight of the graft copolymer. | | | |

## Claims

1. A graft copolymer comprising an olefin polymer or a block copolymer, and an ionic group-containing polymer grafted to said olefin polymer or said block copolymer by a bridging group whose bridging chain has 4 or more atoms, wherein the bridging group has a structure of the formula (1)
-A-B-D (1)
where A is -R₁COO-, -R₁CONH-, -R₁O-, -R₁CONHCOO- or -R₁COOCH₂CH₂NHCOO-,
B is -R₂(OR₃)ₙ- or -R₂(OCOR₃)ₙ-,
D is -OCO-, -NHCO-, -OCONHCO-, -OCONHCH₂CH₂OCO- or -O-,
R₁ is a substituted or unsubstituted straight chain or branched alkylene group, or a substituted or unsubstituted cycloalkylene group,
R₂ is a substituted or unsubstituted straight chain or branched alkylene group,
R₃ is a substituted or unsubstituted straight chain or branched alkylene group, and
n is an integer of 0 to 6.

2. The graft copolymer of claim 1, wherein
the R₁ is a straight chain or branched alkylene group, or a cycloalkylene group, each group having 1 to 18 carbon atoms, and one or more hydrogen atoms of the alkylene group or the cycloalkylene group may be substituted by a carboxyl group, an ester group, an acyl group, a hydroxyl group, or an aryl group,
the R₂ is a straight chain or branched alkylene group having 1 to 18 carbon atoms, and one or more hydrogen atoms of the alkylene group may be substituted by a hydroxyl group, and
the R₃ is a straight chain or branched alkylene group having 1 to 18 carbon atoms, and one or more hydrogen atoms of the alkylene group may be substituted by a carboxyl group, an ester group, an acyl group, a hydroxyl group, or an aryl group.

3. The graft copolymer of claim 1, which comprises a block copolymer, and an ionic group-containing polymer grafted to said block copolymer by a bridging group whose bridging chain has 4 or more atoms.

4. The graft copolymer of claim 3, wherein the block copolymer is a block copolymer of a monovinyl aromatic hydrocarbon and a conjugated diene.

5. The graft copolymer of claim 1, wherein the ionic group-containing polymer has a structure formed by polymerizing a radical polymerizable unsaturated compound having an ionic group.

6. The graft copolymer of claim 1, wherein the ionic group-containing polymer has a structure formed by copolymerizing a radical polymerizable unsaturated compound having an ionic group with a radical polymerizable unsaturated compound having no ionic group.

7. The graft copolymer of claim 1, wherein the ionic group is a cationic group.

8. The graft copolymer of claim 7, wherein the ionic group is a tertiary amine base or a quaternary ammonium base.

9. The graft copolymer of claim 1, wherein the ionic group is an amphoteric group.

10. The graft copolymer of claim 9, wherein the ionic group is a carboxybetaine group, a sulfobetaine group, or an N-oxide group.

11. The graft copolymer of claim 1, wherein the ionic group is an anionic group.

12. The graft copolymer of claim 11, wherein the ionic group is a carboxylate group or a sulfonate group.

13. A film or sheet having the graft copolymer of claim 1 laminated on a film or sheet comprising a thermoplastic resin.

14. A process for producing the graft copolymer of claim 1, comprising:
reacting a radical polymerizable unsaturated compound (b) with a modified olefin polymer (a1) or a modified block copolymer (a2) to form a radical polymerizable olefin polymer (c1) or a radical polymerizable block copolymer (c2), said modified olefin polymer (a1) and said radical polymerizable block copolymer (c2)having a functional group selected from the group consisting of a hydroxyl group, a carboxyl group, an anhydrous carboxyl group, an epoxy group, and an isocyanate group, and said radical polymerizable unsaturated compound (b) having a functional group reactive with the functional group; and
then radical copolymerizing a radical polymerizable unsaturated compound (d) having an ionic group with said radical polymerizable olefin polymer (c1) or said radical polymerizable block copolymer (c2).

15. The process of claim 14, wherein a radical polymerizable unsaturated compound having no ionic group is also copolymerized during the radical copolymerization.

16. A process for producing the graft copolymer of claim 1, comprising:
reacting a radical polymerizable unsaturated compound (b) with a modified olefin polymer (a1) or a modified block copolymer(a2) to form a radical polymerizable olefin polymer (c1) or a radical polymerizable block copolymer (c2), said modified olefin polymer (a1) and said modified block copolymer(a2)having a functional group selected from the group consisting of a hydroxyl group, a carboxyl group, an anhydrous carboxyl group, an epoxy group, and an isocyanate group, and said radical polymerizable unsaturated compound (b) having a functional group reactive with the functional group;
then radical copolymerizing a radical polymerizable unsaturated compound (d') having a precursor group for an ionic group with said radical polymerizable olefin polymer (c1) or said radical polymerizable block copolymer (c2); and
then converting the precursor group into an ionic group.

17. The process of claim 16, wherein a radical polymerizable unsaturated compound having no precursor group for an ionic group is also copolymerized during the radical copolymerization.

## Patentansprüche

1. Pfropfcopolymer, das ein Olefinpolymer oder ein Blockcopolymer sowie ein Polymer, das ionische Gruppen enthält und durch eine verbrückende Gruppe, deren verbrückende Kette 4 oder mehr Atome aufweist, auf dieses Olefinpolymer oder Blockcopolymer aufgepfropft ist, umfasst, wobei die verbrückende Gruppe eine Struktur der Formel (1) hat:
-A-B-D (1)
wobei A = -R₁COO-, -R₁CONH-, -R₁O-, -R₁CONHCOO- oder -R₁COO-CH₂CH₂NHCOO- ist;
B = -R₂(OR₃)ₙ- oder -R₂(OCOR₃)ₙ- ist;
D = -OCO-, -NHCO-, -OCONHCO-, -OCONHCH₂CH₂OCO- oder -O- ist;
R₁ eine substituierte oder unsubstituierte geradkettige oder verzweigte Alkylengruppe oder eine substituierte oder unsubstituierte Cycloalkylengruppe ist;
R₂ eine substituierte oder unsubstituierte geradkettige oder verzweigte Alkylengruppe ist;
R₃ eine substituierte oder unsubstituierte geradkettige oder verzweigte Alkylengruppe ist; und
n eine ganze Zahl von 0 bis 6 ist.

2. Pfropfcopolymer gemäß Anspruch 1, wobei
R₁ eine geradkettige oder verzweigte Alkylengruppe oder eine Cycloalkylengruppe ist, wobei jede Gruppe 1 bis 18 Kohlenstoffatome aufweist und ein oder mehrere Wasserstoffatome der Alkylengruppe oder Cycloalkylengruppe durch eine Carboxygruppe, eine Estergruppe, eine Acylgruppe, eine Hydroxygruppe oder eine Arylgruppe substituiert sein können;
R₂ eine geradkettige oder verzweigte Alkylengruppe mit 1 bis 18 Kohlenstoffatomen ist und ein oder mehrere Wasserstoffatome der Alkylengruppe durch eine Hydroxygruppe substituiert sein können; und
R₃ eine geradkettige oder verzweigte Alkylengruppe mit 1 bis 18 Kohlenstoffatomen ist und ein oder mehrere Wasserstoffatome der Alkylengruppe durch eine Carboxygruppe, eine Estergruppe, eine Acylgruppe, eine Hydroxygruppe oder eine Arylgruppe substituiert sein können.

3. Pfropfcopolymer gemäß Anspruch 1, das ein Blockcopolymer sowie ein Polymer, das ionische Gruppen enthält und durch eine verbrückende Gruppe, deren verbrückende Kette 4 oder mehr Atome aufweist, auf dieses Blockcopolymer aufgepfropft ist, umfasst.

4. Pfropfcopolymer gemäß Anspruch 3, wobei das Blockcopolymer ein Blockcopolymer aus einem Monovinyl-aromatischen Kohlenwasserstoff und einem konjugierten Dien ist.

5. Pfropfcopolymer gemäß Anspruch 1, wobei das die ionischen Gruppen enthaltende Polymer eine Struktur hat, die durch Polymerisieren einer radikalisch polymerisierbaren ungesättigten Verbindung, die eine ionische Gruppe aufweist, gebildet wird.

6. Pfropfcopolymer gemäß Anspruch 1, wobei das die ionischen Gruppen enthaltende Polymer eine Struktur hat, die durch Copolymerisieren einer radikalisch polymerisierbaren ungesättigten Verbindung, die eine ionische Gruppe aufweist, mit einer radikalisch polymerisierbaren ungesättigten Verbindung, die keine ionische Gruppe aufweist, gebildet wird.

7. Pfropfcopolymer gemäß Anspruch 1, wobei die ionische Gruppe eine kationische Gruppe ist.

8. Pfropfcopolymer gemäß Anspruch 7, wobei die ionische Gruppe eine tertiäre Aminbase oder eine quartäre Ammoniumbase ist.

9. Pfropfcopolymer gemäß Anspruch 1, wobei die ionische Gruppe eine amphotere Gruppe ist.

10. Pfropfcopolymer gemäß Anspruch 9, wobei die ionische Gruppe eine Carboxybetaingruppe, eine Sulfobetaingruppe oder eine N-Oxidgruppe ist.

11. Pfropfcopolymer gemäß Anspruch 1, wobei die ionische Gruppe eine anionische Gruppe ist.

12. Pfropfcopolymer gemäß Anspruch 11, wobei die ionische Gruppe eine Carboxylatgruppe oder eine Sulfonatgruppe ist.

13. Film oder Folie, wobei das Pfropfcopolymer von Anspruch 1 auf einen Film oder eine Folie laminiert ist, der bzw. die ein thermoplastisches Harz umfasst.

14. Verfahren zur Herstellung des Pfropfcopolymers gemäß Anspruch 1, umfassend:
Umsetzen einer radikalisch polymerisierbaren ungesättigten Verbindung (b) mit einem modifizierten Olefinpolymer (a1) oder einem modifizierten Blockcopolymer (a2) unter Bildung eines radikalisch polymerisierbaren Olefinpolymers (c1) oder eines radikalisch polymerisierbaren Blockcopolymers (c2), wobei das modifizierte Olefinpolymer (a1) und das radikalisch polymerisierbare Blockcopolymer (c2) eine funktionelle Gruppe aufweisen, die aus der Gruppe ausgewählt ist, die aus einer Hydroxygruppe, einer Carboxygruppe, einer Carbonsäureanhydridgruppe, einer Epoxygruppe und einer Isocyanatgruppe besteht, und die radikalisch polymerisierbare ungesättigte Verbindung (b) eine funktionelle Gruppe aufweist, die gegenüber der funktionellen Gruppe reaktiv ist; und
danach radikalisches Copolymerisieren einer radikalisch polymerisierbaren ungesättigten Verbindung (d), die eine ionische Gruppe aufweist, mit dem radikalisch polymerisierbaren Olefinpolymer (c1) oder dem radikalisch polymerisierbaren Blockcopolymer (c2).

15. Verfahren gemäß Anspruch 14, wobei eine radikalisch polymerisierbare ungesättigte Verbindung, die keine ionische Gruppe aufweist, während der radikalischen Copolymerisation ebenfalls copolymerisiert wird.

16. Verfahren zur Herstellung des Pfropfcopolymers gemäß Anspruch 1, umfassend:
Umsetzen einer radikalisch polymerisierbaren ungesättigten Verbindung (b) mit einem modifizierten Olefinpolymer (a1) oder einem modifizierten Blockcopolymer (a2) unter Bildung eines radikalisch polymerisierbaren Olefinpolymers (c1) oder eines radikalisch polymerisierbaren Blockcopolymers (c2), wobei das modifizierte Olefinpolymer (a1) und das modifizierte Blockcopolymer (a2) eine funktionelle Gruppe aufweisen, die aus der Gruppe ausgewählt ist, die aus einer Hydroxygruppe, einer Carboxygruppe, einer Carbonsäureanhydridgruppe, einer Epoxygruppe und einer Isocyanatgruppe besteht, und die radikalisch polymerisierbare ungesättigte Verbindung (b) eine funktionelle Gruppe aufweist, die gegenüber der funktionellen Gruppe reaktiv ist;
danach radikalisches Copolymerisieren einer radikalisch polymerisierbaren ungesättigten Verbindung (d'), die eine Vorläufergruppe für eine ionische Gruppe aufweist, mit dem radikalisch polymerisierbaren Olefinpolymer (c1) oder dem radikalisch polymerisierbaren Blockcopolymer (c2); und
dann Umwandeln der Vorläufergruppe in eine ionische Gruppe.

17. Verfahren gemäß Anspruch 16, wobei eine radikalisch polymerisierbare ungesättigte Verbindung, die keine Vorläufergruppe für eine ionische Gruppe aufweist, während der radikalischen Copolymerisation ebenfalls copolymerisiert wird.

## Revendications

1. Un copolymère greffé comprenant un polymère oléfinique ou un copolymère séquencé, et un polymère contenant un groupe ionique, greffé sur ledit polyoléfine oléfinique ou ledit copolymère séquencé par un groupe de pontage dont la chaîne de pontage compte au moins 4 atomes de carbone, dans lequel le groupe de pontage a une structure de la formule (1)
-A-B-D (1)
où
A est -R₁COO-, -R₁CONH-, R₁O-, -R₁CONHCOO- ou -R₁COOCH₂CH₂NHCOO-,
B est -R₂(OR₃)ₙ- ou -R₂(OCOR₃)ₙ-,
D est -OCO-, -NHCO-, -OCONHCO-, -OCONHCH₂CH₂OCO- ou -O-,
R₁ est un groupe alkylène à chaîne droite ou ramifiée, substitué ou non substitué, ou un groupe cycloalkylène substitué ou non substitué,
R₂ est un groupe alkylène à chaîne droite ou ramifiée, substitué ou non substitué,
R₃ est un groupe alkylène à chaîne droite ou ramifiée, substitué ou non substitué, et
n est un nombre entier de 0 à 6.

2. Le copolymère greffé de la revendication 1, dans lequel
R₁ est un groupe alkylène à chaîne droite ou ramifiée, ou un groupe cycloalkylène, chaque groupe ayant 1 à 18 atomes de carbone, et un ou plusieurs atomes d'hydrogène du groupe alkylène ou du groupe cycloalkylène peuvent être remplacés par un groupe carboxyle, un groupe ester, un groupe acyle, un groupe hydroxyle ou un groupe aryle,
R₂ est un groupe alkylène à chaîne droite ou ramifiée ayant 1 à 18 atomes de carbone, et un ou plusieurs atomes d'hydrogène du groupe alkylène peuvent être remplacés par un groupe hydroxyle, et
R₃ est un groupe alkylène à chaîne droite ou ramifiée ayant 1 à 18 atomes de carbone, et un ou plusieurs atomes d'hydrogène du groupe alkylène peuvent être remplacés par un groupe carboxyle, un groupe ester, un groupe acyle, un groupe hydroxyle ou un groupe aryle.

3. Le copolymère greffé de la revendication 1, qui comprend un copolymère séquencé, et un polymère contenant un groupe ionique, greffé audit copolymère séquencé par un groupe de pontage dont la chaîne de pontage compte au moins 4 atomes.

4. Le copolymère greffé de la revendication 3, dans lequel le copolymère séquencé est un copolymère séquencé d'un hydrocarbure aromatique monovinylique et d'un diène conjugué.

5. Le copolymère greffé de la revendication 1, dans lequel le polymère contenant un groupe ionique a une structure formée par polymérisation d'un composé insaturé polymérisable par voie radicalaire ayant un groupe ionique.

6. Le copolymère greffé de la revendication 1, dans lequel le polymère contenant un groupe ionique a une structure formée par copolymérisation d'un composé insaturé polymérisable par voie radicalaire ayant un groupe ionique avec un composé insaturé polymérisable par voie radicalaire n'ayant pas de groupe ionique.

7. Le copolymère greffé de la revendication 1, dans lequel le groupe ionique est un groupe cationique.

8. Le copolymère greffé de la revendication 7, dans lequel le groupe ionique est une base du type amine tertiaire ou une base du type ammonium quaternaire.

9. Le copolymère greffé de la revendication 1, dans lequel le groupe ionique est un groupe amphotère.

10. Le copolymère greffé de la revendication 9, dans lequel le groupe ionique est un groupe carboxybétaïne, un groupe sulfobétaïne ou un groupe N-oxyde.

11. Le copolymère greffé de la revendication 1, dans lequel le groupe ionique est un groupe anionique.

12. Le copolymère greffé de la revendication 11, dans lequel le groupe ionique est un groupe carboxylate ou un groupe sulfonate.

13. Un film ou une feuille ayant le copolymère greffé de la revendication 1 stratifié sur un film ou une feuille comprenant une résine thermoplastique.

14. Un procédé de production du copolymère greffé de la revendication 1, comprenant :
la réaction d'un composé insaturé polymérisable par voie radicalaire (b) avec un polymère oléfinique modifié (a1) ou un copolymère séquencé modifié (a2) pour former un polymère oléfinique polymérisable par voie radicalaire (c1) ou un copolymère séquencé polymérisable par voie radicalaire (c2), ledit polymère oléfinique modifié (a1) et ledit copolymère séquencé polymérisable par voie radicalaire (c2) ayant un groupe fonctionnel choisi dans la classe formée par un groupe hydroxyle, un groupe carboxyle, un groupe carboxyle anhydre, un groupe époxy et un groupe isocyanate, et ledit composé insaturé polymérisable par voie radicalaire (b) ayant un groupe fonctionnel réactif avec le groupe fonctionnel ; puis
la copolymérisation radicalaire d'un composé insaturé polymérisable par voie radicalaire (d) ayant un groupe ionique avec ledit polymère oléfinique polymérisable par voie radicalaire (c1) ou ledit copolymère séquencé polymérisable par voie radicalaire (c2).

15. Le procédé de la revendication 14, dans lequel un composé insaturé polymérisable par voie radicalaire n'ayant pas de groupe ionique est également copolymérisé pendant la copolymérisation radicalaire.

16. Un procédé pour la production du copolymère greffé de la revendication 1, comprenant :
la réaction d'un composé insaturé polymérisable par voie radicalaire (b) avec un polymère oléfinique modifié (a1) ou un copolymère séquencé modifié (a2) pour former un polymère oléfinique polymérisable par voie radicalaire (c1) ou un copolymère séquencé polymérisable par voie radicalaire (c2), ledit polymère oléfinique modifié (a1) et ledit copolymère séquencé modifié (a2) ayant un groupe fonctionnel choisi dans la classe formée par un groupe hydroxyle, un groupe carboxyle, un groupe carboxyle anhydre, un groupe époxy et un groupe isocyanate, et ledit composé insaturé polymérisable par voie radicalaire (b) ayant un groupe fonctionnel réactif avec le groupe fonctionnel ; puis
la copolymérisation radicalaire d'un composé insaturé polymérisable par voie radicalaire (d') ayant un groupe précurseur d'un groupe ionique avec ledit polymère oléfinique polymérisable par voie radicalaire (c1) ou ledit copolymère séquencé polymérisable par voie radicalaire (c2) ; puis
la conversion du groupe précurseur en un groupe ionique.

17. Le procédé de la revendication 16, dans lequel un composé insaturé polymérisable par voie radicalaire n'ayant pas de groupe précurseur d'un groupe ionique est également copolymérisé pendant la copolymérisation radicalaire.
